# EUROPEAN PATENT SPECIFICATION

(11) **EP 3 247 222 B1**
(45) Date of publication and mention of the grant of the patent: **26.09.2018**
(21) Application number: 16701003.2
(22) Date of filing: 19.01.2016
(51) Int. Cl.: A23L 2/52, A23L 2/56, A23L 2/62, A23F 3/14, A23F 3/16, A23F 3/30, A23L 33/105

(54) **IMPROVED BEVERAGE COMPRISING TEA POLYPHENOLS**
VERBESSERTES GETRÄNK MIT TEEPOLYPHENOLEN
BOISSON AMÉLIORÉE COMPRENANT DES POLYPHÉNOLS DE THÉ

(30) Priority: 22.01.2015 EP 15152167
(43) Date of publication of application: 29.11.2017
(73) Proprietor: Unilever PLC, London, Greater London EC4Y 0DY (GB); Unilever NV, 3013 AL Rotterdam (NL)
(72) Inventor: LAFON, William Daniel, Trumbull, Connecticut 06611 (US); TAREILUS, Erwin Werner, 3133 AT Vlaardingen (NL)
(74) Representative: Askew, Sarah Elizabeth
(86) International application number: PCT/EP2016/050996
(87) International publication number: WO 2016/116436

(56) References cited:
- WO-A1-94/14329
- WO-A1-2011/118481
- CN-A- 102 113 560
- JP-A- 2000 300 226
- JP-A- 2009 034 076
- JP-A- 2011 148 778
- JP-A- 2014 082 993

## Description

### TECHNICAL FIELD OF THE INVENTION

The present invention relates to beverages comprising tea solids. More particularly, the present invention is directed towards beverages which comprise tea solids and water-soluble soybean polysaccharide.

### BACKGROUND OF THE INVENTION

Tea has been consumed as a beverage for well over 2000 years and, excluding water, it is the most popular beverage consumed by man. Tea is very refreshing, can be served either hot or cold, and has been commercially available for many years.

Packaged ready-to-drink (RTD) tea beverages, such as iced tea, are popular with consumers (e.g. as an alternative to carbonated soft drinks). Unfortunately, such beverages often develop haze and/or sediment upon storage, which makes their appearance less attractive. Haze formation in RTD beverages not only influences the appearance of the product, giving the impression that the beverage is spoiled, but also accelerates the loss of both taste and colour.

For RTD beverages with fruit flavours, acidification is required to prepare formulations with desirable flavour balance. Furthermore, acidification may also be advantageous with respect to improving the microbiological stability of RTD tea beverages. Unfortunately, sedimentation of solids from such acidified beverages is particularly pronounced, and can occur after storage periods ranging from as little as a week to as long as 6 to 12 weeks.

JP 2011/148,778 discloses a liquid preparation composition wherein the bitter taste of catechins is improved and no precipitation is resulted.

Attempts to address the sedimentation issues associated with RTD tea beverages have been made. For example, WO 94/14329 (Unilever) relates to a process for manufacturing a "crystal clear" cold water soluble, chill stable, and acid stable ready-to-drink tea, as well as to the product produced thereby. The acidified tea beverages disclosed therein are stabilised by the addition of high methoxy pectin in an amount of 50 to 500 ppm. Unfortunately, the use of pectin to stabilise tea beverages has a number of drawbacks. In particular, the relatively high levels of pectin that are required to stabilise such beverages may have a negative impact on their organoleptic properties, and/or may decrease their consumer acceptability. Without wishing to be bound by theory, it is believed that, high levels of pectin can induce undesirable changes in the flavour, and/or mouthfeel of beverages.

Thus we have recognised that there is still a need to provide beverage products comprising tea polyphenols which have good organoleptic properties and which do not suffer from the drawbacks of haze formation and/or sedimentation.

### TESTS AND DEFINITIONS

As used herein the term "comprising" encompasses the terms "consisting essentially of' and "consisting of'. All percentages and ratios contained herein are calculated by weight unless otherwise indicated. It should be noted that in specifying any range of values or amounts, any particular upper value or amount can be associated with any particular lower value or amount. The various features of the embodiments of the present invention referred to in individual sections below apply, as appropriate, to other sections *mutatis mutandis.* Consequently features specified in one section may be combined with features specified in other sections as appropriate. The disclosure of the invention as found herein is to be considered to cover all embodiments as found in the claims as being multiply dependent upon each other.

### Beverage

As used herein the term "beverage" refers to a substantially aqueous drinkable composition suitable for human consumption. Preferably such a beverage comprises at least 85% water by weight, more preferably at least 90% by weight, and most preferably at least 95% by weight.

### Tea solids

As used herein the term "tea solids" refers to dry material extractable from the leaves and/or stems of the plant *Camellia sinensis* var. *sinensis* and/or *Camellia sinensis* var. *assamica.* The term "tea extract" refers to an extract that comprises tea solids.

### Water-soluble soybean polysaccharide (SSPS)

As used herein, the term "water-soluble soybean polysaccharide" (abbreviated to "SSPS") refers to a heteropolysaccharide obtainable from crude soy material. The SSPS is part of the cell wall material of soy. SSPS can be obtained from whole soybean material by subjecting soybean material to a process which partially hydrolyses the cell wall material of soy. The process typically requires hydrolysing by a strong acid or base or enzymatic breakdown, optionally combined with subjecting the soybean material to high temperatures and/or high shear.

The backbone of SSPS is believed to consist of homogalacturonan regions interlinked by short regions of rhamnogalacturonan to which side chains of neutral sugars are attached. The main components of SSPS are galactose, arabinose, rhamnose, fucose, xylose, glucose and galacturonic acid. Preferably, the SSPS comprises galacturonic acid in an amount of less than 40 mol% and neutral sugar side chains in an amount of more than 40 mol%. It is preferred that the SSPS comprises galacturonic acid in an amount of less than 30 mol%, and more preferably in an amount of less than 25 mol%. Similarly, it is preferred that the SSPS comprises neutral sugars in an amount of more than 50 mol%, and more preferably in an amount of more than 60 mol%. A preferred SSPS consists mainly of arabinose, galactose and galacturonic acid. Preferably, the amount of galactose in the SSPS is more than 20 mol%, more preferably more than 30 mol%, and most preferably more than 35 mol%. The amount of arabinose in the SSPS is preferably more than 15 mol%, more preferably more than 20 mol%, and most preferably more than 23 mol%. The SSPS typically has a molecular weight (Mw) of 50 to 1000 kDa.

Sugar composition and the level of the different components is analysed using gas chromatograph after hydrolysis and derivativisation (Englyst & Cummings (1984) Analyst 109: 937-942). The total uronic acid content is determinate with the automated m-hydroxydiphenyl assay (Thibault (1979) Food Sci. & Technol. 12: 247-251). Differential determination of galacturonic acid and glucouronic acid is carried out by HPAEC after methanolysis (De Ruiter et al. (1992) Analytical Biochem. 207: 176-185).

### SUMMARY OF THE INVENTION

The present inventors have found that water-soluble soybean polysaccharide (SSPS) can prevent and/or reduce haze formation in beverages comprising tea solids. The effective range of SSPS in such beverages is 0.1 ppm to 600 ppm.

Thus in a first aspect, the present invention relates to a beverage comprising 0.05 wt% to 3 wt% tea solids and 0.1 ppm to 600 ppm water-soluble soybean polysaccharide (SSPS), wherein the beverage is substantially free of exogenous protein.

In a second aspect, the present invention relates to the use of water-soluble soy polysaccharide (SSPS) for reducing or eliminating haze and/or sediment formation in beverages comprising tea solids.

### DETAILED DESCRIPTION

The beverage of the present invention comprises 0.05 wt% to 3 wt% tea solids. In order to provide a beverage with a refreshing tea flavour, the beverage preferably comprises at least 0.06 wt% tea solids, more preferably at least 0.08 wt%, still more preferably at least 0.1 wt%. Furthermore, the beverage preferably comprises no more than 2 wt% tea solids, more preferably no more than 1 wt%, still more preferably no more than 0.8 wt%.

The beverage of the present invention comprises 0.1 ppm to 600 ppm water-soluble soybean polysaccharide (SSPS). The present inventors have found that water-soluble soluble soybean polysaccharide (SSPS) can prevent and/or reduce haze formation in beverages comprising tea solids even at low levels of SSPS. From the standpoint of cost it is preferable that the amount of SSPS used is as low as possible, on the other hand, high levels of SSPS can lead to an undesirable mouthfeel and/or have a negative impact on the flavour of the beverage. Thus beverage of the present invention comprises at least 0.1 ppm SSPS, preferably at least 1 ppm, more preferably at least 5 ppm, more preferably at least 10 ppm, still more preferably at least 25 ppm, and most preferably at least 50 ppm. Furthermore, the beverage of the present invention comprises no more than 600 ppm SSPS, preferably no more than 500 ppm, more preferably no more than 450 ppm, still more preferably no more than 400 ppm, and most preferably no more than 350 ppm.

The weight ratio of SSPS to tea solids is at least 1:20, more preferably at least 1:25, and still more preferably at least 1:50. In order to provide long-term stabilisation of the beverage, the weight ratio of SSPS to tea solids is preferably no more than 1:5000, more preferably no more than 1:3000, and still more preferably no more than 1:1500.

Whilst a very small amount of haze and/or sediment may be acceptable to consumers, it is preferred that the beverage of the present invention is substantially clear.

From a standpoint of taste and/or microbial stability, it is preferred that the beverage has an acidic pH. In particular, the pH (at 20°C) is preferably from 2 to 5, more preferably from 2.5 to 4.

In order to achieve an acidic pH, the beverage preferably comprises one or more acidulant. Suitable acidulants include organic acids such as citric acid, malic acid, tartaric acid, ascorbic acid, and salts thereof. Mixtures of one or more of these acidulants are also suitable. A particularly well-balance flavour may be provided when the acidulant comprises malic acid and/or a salt thereof. Mixtures of citric acid (and/or its salt), malic acid (and/or its salt), and ascorbic acid (and/or its salt) also provide good flavour. Typically, the concentration of the acidulant in the beverage will be from 0.001 to 1% by weight, more preferably from 0.01 to 0.5% by weight.

From the point of view of convenience, the beverage is preferably packaged. It is particularly preferred that the packaged beverage has a ready-to-drink format, so the consumer does not need to dilute the beverage prior to consumption. The package will typically be a bottle, a can, a carton, or a pouch.

The beverage is preferably sanitised, e.g. by pasteurisation or sterilisation.

For convenience of transport and handling, it is preferred that the mass of the beverage in the package is no more than 2100 g, preferably 1600 g, more preferably no more than 1100 g. It is particularly preferred that the beverage is packaged in an amount that constitutes a single serving. A single serving of the beverage preferably has a mass of less than 600g, more preferably less than 550 g, and most preferably from 100 to 350 g.

Preferred formats are black tea beverages and green tea beverages.

The health benefits of green tea are primarily attributed to its high catechin content. A positive correlation between catechin consumption and improved cardiovascular health has been established. Thus when the beverage is a green tea beverage, it preferably comprises catechins in an amount of at least 50 mg, more preferably at least 60 mg, and still more preferably at least 75 mg. In order to provide the health benefits associated with catechins in a convenient manner, it is particularly preferred that these catechin levels are delivered in a single serving of the beverage. The preferred mass of a single serving of the beverage is described above.

Black tea is also reported to have health benefits. For example, it has been reported that black tea and/or components thereof can have a positive influence on gut microflora. These health benefits have been attributed to black tea polyphenols. Examples of black tea polyphenols include theaflavins and thearubigins. Once again, the preferred mass of a single serving of the beverage is as described above.

Caffeine is widely reported to increase mental alertness. However, high levels of caffeine are known to impart unwanted bitterness to the beverage. Furthermore, some consumers are concerned about the perceived health risks of a high caffeine intake. The beverage preferably comprises 0.001 to 0.1% by weight caffeine, more preferably 0.005 to 0.05% by weight caffeine.

It is particularly preferred that the beverage is a flavoured tea beverage, most preferably a fruit-flavoured tea beverage. Suitable flavours include natural and synthetic fruit flavours, and/or natural or synthetic herb flavours. Examples of fruit flavours include: apple, apricot, blackcurrant, cherry, cranberry, grape, grapefruit, guava, kiwi, lemon, lime, lychee, mandarin, mango, nectarine, orange, peach, pear, pineapple, plum, passion fruit, raspberry, and strawberry. Examples of herb flavours include: chamomile, chrysanthemum, elderflower, hawthorn, hibiscus, jasmine, mint, osmanthus, rose, and verbena.

Consumers prefer beverages with a sweet taste. Therefore, the beverage preferably comprises nutritive sweetener, non-nutritive sweetener, or mixtures thereof.

Non-nutritive sweeteners allow beverages to be formulated that have a low energy content, and yet still taste pleasantly sweet. Health-conscious consumers often prefer such beverages. Preferred examples of non-nutritive sweeteners include aspartame, saccharin, acesulfame K, glycyrrhizin, stevia-derived sweetening agents (for example: stevioside, rebaudioside A, rebaudioside C, ducloside A; preferred examples being stevioside and/or rebaudioside), sucralose, and mixtures thereof. Owing to their well-rounded flavour, the most preferred non-nutritive sweeteners are acesulfame K, aspartame, sucralose, rebaudioside A, or mixtures thereof. The concentration of non-nutritive sweetener will depend on the relative sweetness of the sweetener, and the composition of the beverage. Typically, the beverage will comprise non-nutritive sweetener in an amount of 0.00001 to 10% by weight of the beverage, more preferably 0.001 to 1 % by weight and most preferably 0.01 to 0.1 % by weight.

On the other hand, consumers may prefer the perceived naturalness of nutritive sweeteners. Examples of nutritive sweeteners include glucose, sucrose, fructose, and mixtures thereof. A particularly preferred example of a natural nutritive sweetener is honey.

The beverage may have a high calorie content (e.g. have an energy content of more than 100 kCal per 100 g of the beverage, preferably between 150 and 1000 kCal). Such beverages preferably comprise one or more nutritive sweetener, optionally in combination with one or more non-nutritive sweetener.

In one preferred embodiment, the beverage is a low-calorie beverage (e.g. having an energy content of less than 100 kCal per 100g of the beverage). It is particularly preferred that a single serving of the beverage has a total energy content of less than 10 kCal, more preferably less than 5 kCal, most preferably less than 1 kCal. The mass of the beverage which preferably constitutes a single serving is set out above. Low calorie beverages preferably comprise one or more non-nutritive sweetener.

The beverage of the present invention is preferably substantially free of exogenous protein. In particular, the beverage is preferably substantially free of milk protein. More preferably, the beverage contains no milk protein.

### EXAMPLES

The following non-limiting examples illustrate the present invention.

### Example 1

Six beverage products were prepared. A uniform amount of tea solids (0.3 wt.%) was included in each product. Varying levels of SSPS were present in products 1 to 5 (see Table 1). The control product did not contain any SSPS. All of the products had a pH of 3.2.

**TABLE 1**

| **Ingredient** | **Control** | **Product 1** | **Product 2** | **Product 3** | **Product 4** | **Product 5** |
|---|---|---|---|---|---|---|
| Black tea solids | 0.3% | 0.3% | 0.3% | 0.3% | 0.3% | 0.3% |
| SSPS | - | 0.2 ppm | 0.5 ppm | 1 ppm | 5 ppm | 10 ppm |

The colour and haze values of the beverage products were determined using the Hunter LAB (ASTM D1003). The results are summarised in Table 2.

**TABLE 2**

| | **L*** | **a*** | **b*** | **L** | **a** | **b** | **Haze % C/2°** |
|---|---|---|---|---|---|---|---|
| **Control** | 59.25 | 35.73 | 92.84 | 52.25 | 33.10 | 34.08 | 40.1 |
| **Product 1** | 63.00 | 34.64 | 94.71 | 56.21 | 32.62 | 36.42 | 27.3 |
| **Product 2** | 63.26 | 34.57 | 94.90 | 56.48 | 32.58 | 36.59 | 26.5 |
| **Product 3** | 62.92 | 34.79 | 94.88 | 56.11 | 32.76 | 36.38 | 28.7 |
| **Product 4** | 64.67 | 34.76 | 96.33 | 57.99 | 33.02 | 37.55 | 23.0 |
| **Product 5** | 66.13 | 34.52 | 97.51 | 59.57 | 33.01 | 38.53 | 20.4 |

The results show that beverage products according to the present invention have an enhancement of the "b" attribute on the Hunter LAB scale compared to the control beverage. This indicates an improvement in the yellow colour of the beverages, which is believed to be preferred by consumers. Furthermore, Products 1 to 5 show significantly less haze than the control (higher haze values indicate increased haze and reduced clarity).

Thus SSPS can reduce the haze of RTD beverages containing tea solids, even at levels as low as 0.2 ppm (Product 1).

### Example 2

Eleven products, each containing a uniform amount of tea solids (0.3 wt.%), were prepared. A black leaf tea blend (Red Rose, Unilever Canada) was used as the source of the tea solids. Infusions made form this tea blend are known to readily form tea cream when cooled. The tea blend was extracted with water and buffered to a pH of 3.2, with the addition of SSPS (where appropriate). Varying levels of SSPS were present in products 6 to 15 (see Table 3).

**TABLE 3**

| | **Product** | | | | | | | | | | |
|---|---|---|---|---|---|---|---|---|---|---|---|
| **Ingredient** | **Control** | **6** | **7** | **8** | **9** | **10** | **11** | **12** | **13** | **14** | **15*** |
| Black tea solids (wt.%) | 0.3 | 0.3 | 0.3 | 0.3 | 0.3 | 0.3 | 0.3 | 0.3 | 0.3 | 0.3 | 0.3 |
| SSPS (ppm) | - | 0.5 | 2 | 10 | 25 | 50 | 100 | 200 | 315 | 450 | 900 |

| | | | | | | | | | | | |
|---|---|---|---|---|---|---|---|---|---|---|---|
| * Comparative example | | | | | | | | | | | |

The products were chilled at 4°C overnight, following which the colour and haze values of the products were determined using the Hunter LAB. The results are summarised in Table 4.

**TABLE 4**

| | **Product** | | | | | | | | | | |
|---|---|---|---|---|---|---|---|---|---|---|---|
| **Parameter** | **Control** | **6** | **7** | **8** | **9** | **10** | **11** | **12** | **13** | **14** | **15*** |
| **b** | 27.51 | 27.86 | 28.56 | 29.39 | 30.36 | 34.45 | 34.54 | 33.79 | 33.99 | 33.39 | 27.94 |
| **Haze % C/2°** | 61.5 | 56.5 | 53.1 | 54.6 | 53.1 | 37.4 | 37 | 36.2 | 34.4 | 41.1 | 83.8 |

| | | | | | | | | | | | |
|---|---|---|---|---|---|---|---|---|---|---|---|
| * Comparative example | | | | | | | | | | | |

The results show that beverage products according to the present invention (i.e. Products 6 to 14) have an enhancement of the "b" attribute on the Hunter LAB scale compared to the control beverage (higher "b" values represent improved colour). Furthermore, these products (i.e. Products 6 to 14) also exhibit less haze than the control (higher haze values indicate increased haze and reduced clarity). However, Product 15 (which is outside the scope of the invention) does not show an improvement in colour and has a higher level of haze than the control.

Thus SSPS can reduce the haze of RTD beverages containing tea solids, even after chilling (which is known to promote haze formation).

## Claims

1. A beverage comprising 0.05 wt% to 3 wt% tea solids and 0.1 ppm to 600 ppm water-soluble soybean polysaccharide (SSPS), wherein the beverage is substantially free of exogenous protein.

2. A beverage as claimed in claim 1 wherein the beverage comprises 5 ppm to 500 ppm SSPS.

3. A beverage as claimed in claim 1 or claim 2 wherein the beverage has an acidic pH.

4. A beverage as claimed in claim 3 wherein the beverage has a pH of 2 to 5.

5. A beverage as claimed in any one of claims 1 to 4 wherein the weight ratio of SSPS to tea solids is at least 1:20.

6. A beverage as claimed in claim 5 wherein the weight ratio of SSPS to tea solids is 1:50 to 1:5000.

7. A beverage as claimed in any one of claims 1 to 6 wherein the beverage is a packaged ready-to-drink beverage.

8. A beverage as claimed in any one of claims 1 to 7 wherein the beverage is a black tea beverage or a green tea beverage.

9. A beverage as claiming in claim 8 wherein the beverage is a fruit-flavoured tea beverage.

10. A beverage as claimed in any one of claims 1 to 9 wherein the beverage comprises 0.001 to 0.1% by weight caffeine.

11. A beverage as claimed in any one of claims 1 to 10 wherein the beverage comprises nutritive sweetener, non-nutritive sweetener, or mixtures thereof.

12. A beverage as claimed in claim 11 wherein the non-nutritive sweetener is selected from acesulfame K, aspartame, sucralose, rebaudioside A, or mixtures thereof.

13. A beverage as claimed in any one of claims 1 to 12 wherein the beverage comprises tea solids in an amount of 0.1 wt% to 1 wt%.

## Patentansprüche

1. Getränk, umfassend 0,05 Gew.-% bis 3 Gew.-% Teefeststoffe und 0,1 ppm bis 600 ppm wasserlösliches Sojabohnenpolysaccharid (SSPS), wobei das Getränk im Wesentlichen frei von exogenem Protein ist.

2. Getränk, wie im Anspruch 1 beansprucht, wobei das Getränk 5 ppm bis 500 ppm SSPS umfasst.

3. Getränk, wie im Anspruch 1 oder Anspruch 2 beansprucht, wobei das Getränk einen sauren pH aufweist.

4. Getränk, wie in Anspruch 3 beansprucht, wobei das Getränk einen pH von 2 bis 5 aufweist.

5. Getränk, wie in irgendeinem der Ansprüche 1 bis 4 beansprucht, wobei das Gewichtsverhältnis von SSPS zu Teefeststoffen mindestens 1:20 beträgt.

6. Getränk, wie im Anspruch 5 beansprucht, wobei das Gewichtsverhältnis von SSPS zu Teefeststoffen 1:50 bis 1:5000 beträgt.

7. Getränk, wie in irgendeinem der Ansprüche 1 bis 6 beansprucht, wobei das Getränk als Fertiggetränk verpackt ist.

8. Getränk, wie in irgendeinem der Ansprüche 1 bis 7 beansprucht, wobei das Getränk ein Schwarztee-Getränk oder ein Grüntee-Getränk ist.

9. Getränk, wie im Anspruch 8 beansprucht, wobei das Getränk ein Teegetränk mit Fruchtgeschmack ist.

10. Getränk, wie in irgendeinem der Ansprüche 1 bis 9 beansprucht, wobei das Getränk 0,001 bis 0,1 Gewichts-% Koffein umfasst.

11. Getränk, wie in irgendeinem der Ansprüche 1 bis 10 beansprucht, wobei das Getränk nahrhafte Süßstoffe, nicht-nahrhafte Süßstoffe oder Mischungen davon umfasst.

12. Getränk, wie im Anspruch 11 beansprucht, wobei der nicht-nahrhafte Süßstoff unter Acesulfam K, Aspartam, Sucralose, Rebaudiosid A oder Mischungen davon ausgewählt ist.

13. Getränk, wie in irgendeinem der Ansprüche 1 bis 12 beansprucht, wobei das Getränk Teefeststoffe in einer Menge von 0,1 Gew.-% bis 1 Gew.-% umfasst.

## Revendications

1. Boisson comprenant de 0,05 % en masse à 3 % en masse de solides de thé et de 0,1 ppm à 600 ppm de polysaccharide de soja soluble dans l'eau (SSPS), dans laquelle la boisson est pratiquement exempte de protéine exogène.

2. Boisson selon la revendication 1, dans laquelle la boisson comprend de 5 ppm à 500 ppm de SSPS.

3. Boisson selon la revendication 1 ou la revendication 2, dans laquelle la boisson présente un pH acide.

4. Boisson selon la revendication 3, dans laquelle la boisson présente un pH de 2 à 5.

5. Boisson selon l'une quelconque des revendications 1 à 4, dans laquelle le rapport massique de SSPS aux solides de thé est d'au moins 1:20.

6. Boisson selon la revendication 5, dans laquelle le rapport massique de SSPS aux solides de thé est de 1:50 à 1:5 000.

7. Boisson selon l'une quelconque des revendications 1 à 6, dans laquelle la boisson est une boisson prête à boire emballée.

8. Boisson selon l'une quelconque des revendications 1 à 7, dans laquelle la boisson est une boisson de thé noir ou une boisson de thé vert.

9. Boisson selon la revendication 8, dans laquelle la boisson est une boisson de thé aromatisé aux fruits.

10. Boisson selon l'une quelconque des revendications 1 à 9, dans laquelle la boisson comprend de 0,001 à 0,1 % en masse de caféine.

11. Boisson selon l'une quelconque des revendications 1 à 10, dans laquelle la boisson comprend de l'édulcorant nutritif, édulcorant non-nutritif, ou des mélanges de ceux-ci.

12. Boisson selon la revendication 11, dans laquelle l'édulcorant non-nutritif est choisi parmi l'acésulfame K, l'aspartame, le sucralose, le rébaudioside A, ou des mélanges de ceux-ci.

13. Boisson selon l'une quelconque des revendications 1 à 12, dans laquelle la boisson comprend des solides de thé dans une quantité de 0,1 % en masse à 1 % en masse.
